# EUROPÄISCHE PATENTSCHRIFT

(11) **EP 2 781 005 B1**
(45) Veröffentlichungstag und Bekanntmachung des Hinweises auf die Patenterteilung: **29.08.2018**
(21) Anmeldenummer: 12702196.2
(22) Anmeldetag: 13.01.2012
(51) Int. Cl.: H02J 13/00

(54) **ENERGIEVERTEILNETZ**
ENERGY DISTRIBUTION NETWORK
RÉSEAU DE DISTRIBUTION D'ÉNERGIE

(43) Veröffentlichungstag der Anmeldung: 24.09.2014
(73) Patentinhaber: Siemens Aktiengesellschaft, 80333 München (DE)
(72) Erfinder: ENGLERT, Heiko, 90559 Burgthann (DE); GRAF, Klaus-Martin, 63150 Heusenstamm (DE); OPITSCH, Bruno, 90473 Nürnberg (DE)
(86) Internationale Anmeldenummer: PCT/EP2012/050482
(87) Internationale Veröffentlichungsnummer: WO 2013/104423

(56) Entgegenhaltungen:
- WO-A2-2009/048763
- US-A1- 2009 187 344

## Beschreibung

Die Erfindung bezieht sich auf ein Verteilnetz zum Verteilen von Energie, insbesondere elektrischer Energie, mit den Merkmalen gemäß dem Oberbegriff des Patentanspruchs 1.

Für die sichere und zuverlässige Versorgung mit elektrischer Energie müssen Energieversorgungsnetze in einem technisch zulässigen Zustand betrieben werden; dazu zählen insbesondere die Einhaltung des zulässigen Spannungsbandes und der zulässigen Strombelastung. Für den sicheren und zuverlässigen Netzbetrieb ist es erforderlich den Zustand des Energieversorgungsnetzes zu überwachen, um Abweichungen vom zulässigen Betriebszustand erkennen, Maßnahmen einleiten und einen zulässigen Betriebszustand wiederherstellen zu können.

Bisher wurden Energieversorgungsnetze für einen unidirektionalen Lastfluss vom Hochspannungsnetz (Übertragungsnetz) über das Mittel- und Niederspannungsnetz (Verteilnetz) ausgelegt. Überwachungs- und Steuerungstechnik wird hauptsächlich in der Hochspannungsebene und in Übergabestationen zur Mittelspannungsebene eingesetzt. Die Mittel- und Niederspannungsnetze selbst sind kaum automatisiert, d.h. mit Überwachungs- und Steuerungstechnik ausgestattet. Grund dafür ist, dass der Betriebszustand der Verteilnetze auf Basis des unidirektionalen Lastflusses in technisch ausreichender Qualität abgeleitet werden kann. Die Lastflusssituation kann nämlich aus den Messwerten der Übergabestationen und den Netzplanungsdaten anteilsmäßig errechnet werden.

Durch den vermehrten Einsatz von lokalen Energieerzeugungsanlagen (z. B. auf der Basis von Photovoltaik, Windenergie, Blockheizkraftwerken, etc.), die direkt in das Verteilnetz einspeisen, entstehen jedoch bidirektionale Lastflüsse innerhalb des Verteilnetzes. Bei bidirektionalem Lastfluss können unzulässige Betriebszustände nur sehr schwer mit den herkömmlichen Verfahren des unidirektionalen Lastflusses erkannt werden, da der tatsächliche Betriebszustand aus den Messwerten der Übergabestationen und den Netzplanungsdaten nicht errechnet werden kann. Als Folge dieses Sachverhaltes können unzulässige Betriebszustände unerkannt bleiben, was zu Schäden an elektrischen Betriebsmitteln (Leitungen, Kabel, Transformatoren), Netzausfall (Versorgungsunterbrechung) bis hin zur Gefährdung von Menschen führen kann. US 2008/0187344 A1 offenbart ein Verteilnetz gemäß einleitendem Teil von Anspruch 1. Der Erfindung liegt die Aufgabe zugrunde, ein Verteilnetz anzugeben, bei dem auch im Falle bidirektionaler Lastflüsse innerhalb des Verteilnetzes eine zuverlässige Zustandsbestimmung möglich ist.
Diese Aufgabe wird erfindungsgemäß durch ein Verteilnetz mit den Merkmalen gemäß Patentanspruch 1, durch eine Automatisierungseinrichtung gemäß Anspruch 7 und durch ein Verfahren gemäß Anspruch 8 gelöst. Vorteilhafte Ausgestaltungen des erfindungsgemäßen Verteilnetzes sind in Unteransprüchen angegeben.
Danach ist erfindungsgemäß vorgesehen, dass das Verteilnetz mindestens eine der Verteilnetzleiteinrichtung untergeordnete Automatisierungseinrichtung aufweist, die einem Teilnetz des Verteilnetzes zugeordnet ist, mit der Automatisierungseinrichtung zumindest eine an das Teilnetz angeschlossene Messeinrichtung zur Ermittlung von Messwerten, die sich auf das Teilnetz beziehen, in Verbindung steht, und die Automatisierungseinrichtung derart ausgestaltet ist, dass sie auf die Messwerte der zumindest einen Messeinrichtung ein vorgegebenes Zustandsschätzverfahren anwendet, den Zustand des Teilnetzes unter Bildung einer Zustandsangabe schätzt und die geschätzte Zustandsangabe an die Verteilnetzleiteinrichtung überträgt.
Ein wesentlicher Vorteil des erfindungsgemäßen Verteilnetzes ist darin zu sehen, dass eine Zustandsschätzung teilnetzbezogen erfolgt. Durch das Schätzen der Zustände der Teilnetze, also auf der Ebene der der Verteilnetzleiteinrichtung untergeordneten Automatisierungseinrichtungen, wird in vorteilhafter Weise eine Entlastung der Verteilnetzleiteinrichtung erreicht. Außerdem werden die Datenmengen, die von den Teilnetzen an die Verteilnetzleiteinrichtung übermittelt werden müssen, deutlich reduziert; denn es müssen nicht mehr alle in den Teilnetzen ermittelten Messwerte an die Verteilnetzleiteinrichtung übermittelt werden, sondern nur die daraus gebildeten geschätzten Zustandsangaben.
Im Falle mehrerer Teilnetze wird es als vorteilhaft angesehen, wenn mit der Verteilnetzleiteinrichtung eine Mehrzahl an untergeordneten Automatisierungseinrichtungen in Verbindung steht, die jeweils einem Teilnetz des Verteilnetzes zugeordnet sind, und die Automatisierungseinrichtungen jeweils derart ausgestaltet sind, dass sie auf die Messwerte der ihnen zugeordneten Messeinrichtungen jeweils ein teilnetzindividuell vorgegebenes Zustandsschätzverfahren anwenden, den Zustand ihres Teilnetzes jeweils unter Bildung einer Zustandsangabe schätzen und die geschätzten Zustandsangaben an die Verteilnetzleiteinrichtung übertragen.
Mit Blick auf die Ermittlung einer Gesamtzustandsangabe, die den Zustand des gesamten Verteilnetzes angibt, wird es als vorteilhaft angesehen, wenn die Verteilnetzleiteinrichtung derart ausgestaltet ist, dass sie die geschätzten Zustandsangaben der untergeordneten Automatisierungseinrichtungen unter Bildung einer den Zustand des Verteilnetzes angebenden Gesamtzustandsangabe schätzt.
Vorzugsweise stehen die Automatisierungseinrichtung und die zumindest eine Messeinrichtung über eine Kommunikationsverbindung, insbesondere eine PLC-Verbindung (PLC: Power Line Communication = Kommunikation über Energieversorgungsleitungen), eine Funkverbindung (z. B. GSM-Verbindung, GPRS-Verbindung) oder eine Ethernet-Verbindung, in Verbindung.
Bezüglich der Ausgestaltung des teilnetzbezogenen Zustandsschätzverfahrens wird es als notwendig angesehen, die Automatisierungseinrichtung derart auszugestalten, dass sie bei der Anwendung des vorgegebenen Zustandsschätzverfahrens für das ihr zugeordnete Teilnetz parametrierte Leitungsimpedanzen verarbeitet.
Darüber hinaus wird es als vorteilhaft angesehen, wenn die Automatisierungseinrichtung derart ausgestaltet ist, dass sie das vorgegebene Zustandsschätzverfahren unter Berücksichtigung der Netztopologie und/oder eines parametrierten Netz-Normal-Zustands des Teilnetzes durchführt. Entsprechend der Erfindung ist die Automatisierungseinrichtung derart ausgestaltet, dass sie Kommunikationssignale, die von der zumindest einen Messeinrichtung über eine oder mehrere Netzleitungen des Teilnetzes übertragen werden, hinsichtlich der Leitungslängen dieser Netzleitung oder Netzleitungen auswertet und die in dieser Weise bestimmten Leitungslängen bei der Durchführung des Zustandsschätzverfahrens verwertet.
Bezüglich der Auswertung der geschätzten Zustandsgrößen wird es als vorteilhaft angesehen, wenn die Automatisierungseinrichtung derart ausgestaltet ist, dass sie als geschätzte Zustandsangabe eine geschätzte elektrische Zustandsgröße bildet und diese mit einem vorgegebenen Grenzwert vergleicht und bei Über- oder Unterschreiten des vorgegebenen Grenzwerts ein entsprechendes Vergleichsergebnis an die Verteilnetzleiteinrichtung übersendet.
Vorzugsweise ist die Automatisierungseinrichtung derart ausgestaltet, dass sie als Zustandsgröße eine Spannungsgröße, eine Stromgröße und/oder eine Leistungsgröße (vorzugsweise unter Berücksichtigung eines oder mehrerer Temperaturmesswerte) schätzt.
Auch kann die Automatisierungseinrichtung eine Anzeigeeinrichtung zur Anzeige der geschätzten Zustandsangabe und/oder der geschätzten elektrischen Zustandsgröße umfassen. Bevorzugt ist die Automatisierungseinrichtung derart ausgestaltet, dass sie unter Heranziehung der geschätzten Zustandsangabe Steuerungs- und/oder Regelsignale erzeugt, mit denen eine Steuerung und/oder Regelung des zugeordneten Teilnetzes erfolgt, beispielsweise durch Steuerung eines Stufenstellers eines Verteilnetztransformators, Steuerung/Regelung einer Einspeiseleitung von Energieerzeugungsanlagen des Verteilnetzes, Steuerung/Regelung von Verbrauchsanlagen des Verteilnetzes, Steuerung/Regelung von Blindleistungskompensationsanlagen des Teilnetzes.

Bei dem Verteilnetz handelt es sich vorzugsweise um ein Mittelspannungsnetz (Spannung zwischen 1 kV und 10 kV) oder ein Niederspannungsnetz (Spannung bis maximal 1 kV). Die Verteilnetzleiteinrichtung ist vorzugsweise durch eine Zentraleinrichtung gebildet, die den Zustand des Verteilnetzes anhand der von den Automatisierungseinrichtungen gelieferten geschätzten teilnetzindividuellen Zustandsangaben bestimmen kann.

Die Erfindung bezieht sich darüber hinaus auf eine Automatisierungseinrichtung für ein Verteilnetz, wie es oben beschrieben worden ist. Erfindungsgemäß ist bezüglich einer solchen Automatisierungseinrichtung vorgesehen, dass diese auf Messwerte zumindest einer mit ihr in Verbindung stehenden Messeinrichtung ein vorgegebenes Zustandsschätzverfahren anwenden, den Zustand des ihr zugeordneten Teilnetzes unter Bildung einer Zustandsangabe schätzen und die geschätzte Zustandsangabe an eine Verteilnetzleiteinrichtung übertragen kann.

Bezüglich der Vorteile der erfindungsgemäßen Automatisierungseinrichtung sei auf die obigen Ausführungen im Zusammenhang mit dem erfindungsgemäßen Verteilnetz verwiesen, da die Vorteile des erfindungsgemäßen Verteilnetzes denen der erfindungsgemäßen Automatisierungseinrichtung im Wesentlichen entsprechen.

Als Erfindung wird darüber hinaus ein Verfahren zum Betreiben eines Verteilnetzes mit einer Verteilnetzleiteinrichtung und einer Mehrzahl an der Verteilnetzleiteinrichtung untergeordneten Automatisierungseinrichtungen, die jeweils einem Teilnetz des Verteilnetzes zugeordnet sind, angesehen.

Erfindungsgemäß ist bezüglich eines solchen Verfahrens vorgesehen, dass mit den Automatisierungseinrichtungen jeweils ein vorgegebenes teilnetzindividuelles Zustandsschätzverfahren auf Messwerte, die sich auf das jeweilige Teilnetz beziehen, angewendet wird, der Zustand der Teilnetze jeweils unter Bildung einer Zustandsangabe geschätzt wird und die geschätzten Zustandsangaben an die Verteilnetzleiteinrichtung übertragen werden.

Bezüglich der Vorteile des erfindungsgemäßen Verfahrens sei auf die obigen Ausführungen im Zusammenhang mit dem erfindungsgemäßen Verteilnetz verwiesen, da die Vorteile des erfindungsgemäßen Verteilnetzes denen des erfindungsgemäßen Verfahrens im Wesentlichen entsprechen.

Die Erfindung wird nachfolgend von Ausführungsbeispielen näher erläutert; dabei zeigen beispielhaft
- Figur 1: ein Ausführungsbeispiel für ein erfindungsgemäßes Verteilnetz, das mit einem Ausführungsbeispiel für eine erfindungsgemäße Automatisierungseinrichtung ausgestattet ist, und
- Figur 2: ein Ausführungsbeispiel für eine erfindungsgemäße Automatisierungseinrichtung näher im Detail.

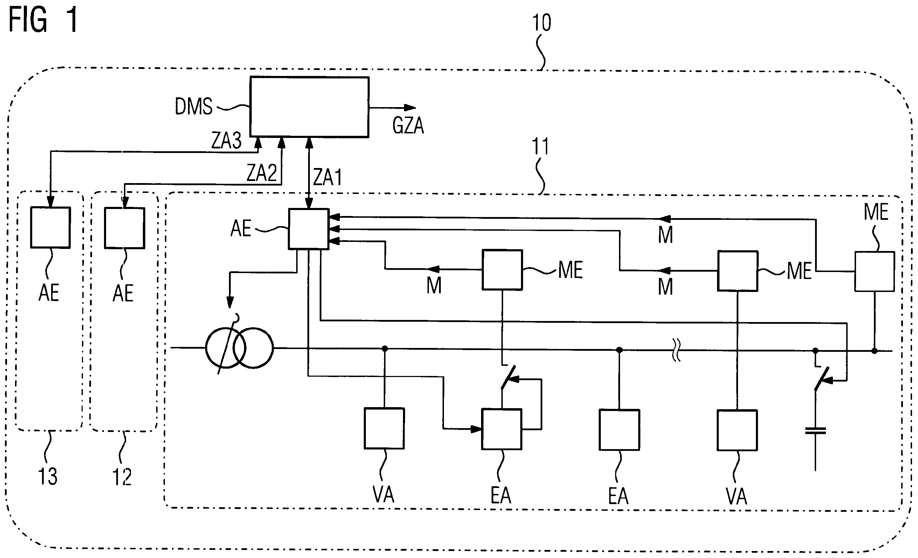

In der Figur 1 sieht man ein Verteilnetz 10, das drei Teilnetze 11, 12 und 13 umfasst bzw. durch diese drei Teilnetze 11, 12 und 13 gebildet ist. Aus Gründen der Übersicht ist in der Figur 1 lediglich das Teilnetz 11 näher im Detail dargestellt. Bei dem Verteilnetz 10 handelt es sich vorzugsweise um ein Mittelspannungsverteilnetz oder um ein Niederspannungsverteilnetz.

In der Figur 1 lässt sich erkennen, dass das Teilnetz 11 Energieerzeugungsanlagen EA, Verbrauchsanlagen VA sowie Messeinrichtungen ME aufweist, die mit einer Automatisierungseinrichtung AE verbunden sind. Die Automatisierungseinrichtung AE erhält von den Messeinrichtungen ME Messwerte M, die sie unter Heranziehung eines teilnetzindividuellen Zustandsschätzverfahrens auswertet. Im Rahmen des teilnetzindividuellen Zustandsschätzverfahrens ermittelt die Automatisierungseinrichtung AE des Teilnetzes 11 eine teilnetzindividuelle Zustandsangabe ZA1, die sie an eine übergeordnete Verteilnetzleiteinrichtung DMS des Verteilnetzes 10 übermittelt.

Wie sich in der Figur 1 erkennen lässt, sind auch die beiden anderen Teilnetze 12 und 13 jeweils mit einer teilnetzindividuellen Automatisierungseinrichtung AE ausgestattet. Auch diese Automatisierungseinrichtungen AE der beiden Teilnetze 12 und 13 werten jeweils Messwerte von Messeinrichtungen aus, die innerhalb des jeweiligen Teilnetzes 12 bzw. 13 vorhanden sind. Im Rahmen der Auswertung der Messwerte wird jeweils ein teilnetzindividuelles Zustandsschätzverfahren angewandt, mit dem für jedes der beiden Teilnetze 12 und 13 jeweils eine teilnetzindividuelle geschätzte Zustandsangabe ZA2 bzw. ZA3 gebildet wird.

Die drei teilnetzindividuellen Zustandsangaben ZA1, ZA2 und ZA3 gelangen zu der zentralen Verteilnetzleiteinrichtung DMS und werden dort ausgewertet, wobei eine den Zustand des gesamten Verteilnetzes 10 angebende Gesamtzustandsangabe GZA gebildet wird.

Wie sich den obigen Erläuterungen entnehmen lässt, sind bei dem Verteilnetz 10 gemäß Figur 1 die Funktionen zur Überwachung des Betriebszustands des Verteilnetzes 10 von der zentralen Verteilnetzleiteinrichtung DMS in die Teilnetze 11, 12 und 13 verlagert worden. Die Schätzung der Zustände der Teilnetze erfolgt dezentral in der Teilnetzebene durch die Automatisierungseinrichtungen AE, die in den jeweiligen Teilnetzen vorhanden sind. Durch die Verlagerung der Zustandsschätzung in die Ebene der Teilnetze bzw. in die Ebene der Automatisierungseinrichtungen AE ist es möglich, die Datenübertragung von der Teilnetzebene zur Verteilnetzleiteinrichtung DMS auf die geschätzten Zustandsangaben ZA1, ZA2 und ZA3 und/oder auf Alarm- und/oder Zustandsmeldungen, die sich auf den Betriebszustand des jeweiligen Verteilnetzes 11, 12 oder 13 beziehen, zu begrenzen.

Durch die Verlagerung der Zustandsschätzung hinein in die Teilnetzebene können sich folgende Vorteile ergeben:
- Durch die lokale Verwendung der Zustandsestimationsfunktion sind Betriebsmesswerte nur von wenigen Netzknoten erforderlich, dies führt zur Verringerung des Ausrüstungs-, Entwicklungs- und Wartungsaufwands für Mess- und Steuerungstechnik im Verteilnetz.
- Präventives Eingreifen in den Netzbetrieb ist bei absehbaren Netzstörungen auf der Basis der Zustandsestimationsfunktion möglich, um Ausfälle oder anderweitige Schäden an Sachgütern oder Leben zu vermeiden.
- Reduktion des Datenaufkommens von der Verteilnetzebene zum zentralen Verteilnetz-Management-System
- Verringerung des Datenverkehrs und damit die Möglichkeit der Verwendung einfacher, schmalbandiger Kommunikationssysteme bzw. die Möglichkeit der parallelen Nutzung der Kommunikationssysteme für weitere Aufgaben
- Verringerung des Datenverarbeitungsaufwands im zentralen Verteilnetz-Management-System
- Bei Ausfall des zentralen Verteilnetz-Management-Systems bzw. der Kommunikationsverbindungen bleibt die lokale Überwachungsfunktion davon unberührt und somit funktionstüchtig.

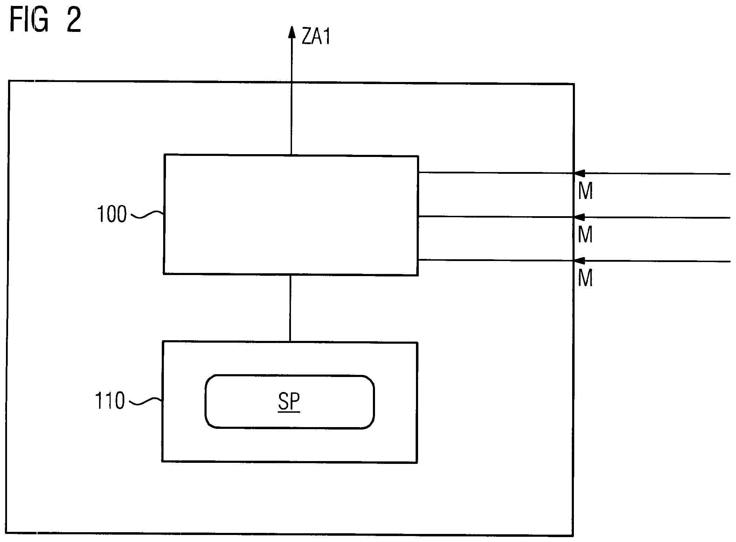

Die Figur 2 zeigt ein Ausführungsbeispiel für eine Automatisierungseinrichtung AE, wie sie bei dem Teilnetz 11 gemäß Figur 1 eingesetzt werden kann. Man erkennt, dass die Automatisierungseinrichtung AE eine Recheneinrichtung 100 aufweist, bei der es sich beispielsweise um eine Mikroprozessoreinrichtung handeln kann. Mit der Recheneinrichtung 100 steht ein Speicher 110 in Verbindung, in dem ein Steuerprogramm SP für die Recheneinrichtung 100 hinterlegt ist.

Das Steuerprogramm SP enthält Programmanweisungen, die es der Recheneinrichtung 100 ermöglichen, die Messergebnisse M der Messeinrichtungen ME gemäß Figur 1 einem teilnetzindividuell vorgegebenen Zustandsschätzverfahren zu unterziehen und eine Zustandsangabe ZA zu bilden, die den Zustand des der Automatisierungseinrichtung AE zugeordneten Teilnetzes angibt. Das Steuerprogramm SP, das in einem Speicher 110 hinterlegt ist, kann Schätzalgorithmen umfassen, wie sie beispielsweise in dem Bedienhandbuch zum Siemens Gerät Spektrum Power CC (Dokumentnummer SPC-TS-TNA-EN-04-2-05) aus dem Jahr 2007 beschrieben sind.

## Patentansprüche

1. Verteilnetz (10) mit einer Verteilnetzleiteinrichtung (DMS), wobei
- das Verteilnetz (10) mindestens eine der Verteilnetzleiteinrichtung (DMS) untergeordnete Automatisierungseinrichtung (AE) aufweist, die einem Teilnetz (11, 12, 13) des Verteilnetzes (10) zugeordnet ist, und wobei mit der Automatisierungseinrichtung (AE) zumindest eine an das Teilnetz (11, 12, 13) angeschlossene Messeinrichtung (ME) zur Ermittlung von Messwerten (M), die sich auf das Teilnetz (11, 12, 13) beziehen, in Verbindung steht,
wobei
- die Automatisierungseinrichtung (AE) derart ausgestaltet ist, dass sie auf die Messwerte (M) der zumindest einen Messeinrichtung (ME) ein vorgegebenes Zustandsschätzverfahren anwendet, den Betriebszustand des Teilnetzes unter Bildung einer Zustandsangabe (ZA1, ZA2, ZA3) schätzt und die geschätzte Zustandsangabe (ZA1, ZA2, ZA3) an die Verteilnetzleiteinrichtung (DMS) überträgt, **dadurch gekennzeichnet, dass** die Automatisierungseinrichtung (AE) derart ausgestaltet ist, dass sie bei der Anwendung des vorgegebenen Zustandsschätzverfahrens für das ihr zugeordnete Teilnetz (11, 12, 13) parametrierte Leitungsimpedanzen verarbeitet; und
- die Automatisierungseinrichtung (AE) derart ausgestaltet ist, dass sie Kommunikationssignale, die von der zumindest einen Messeinrichtung (ME) über eine oder mehrere Netzleitungen des Teilnetzes (11, 12, 13) übertragen werden, hinsichtlich der Leitungslängen dieser Netzleitung oder Netzleitungen auswertet und die in dieser Weise bestimmten Leitungslängen bei der Durchführung des Zustandsschätzverfahrens verwertet.

2. Verteilnetz nach Anspruch 1,
**dadurch gekennzeichnet, dass**
- mit der Verteilnetzleiteinrichtung (DMS) eine Mehrzahl an untergeordneten Automatisierungseinrichtungen (AE) in Verbindung steht, die jeweils einem Teilnetz (11, 12, 13) des Verteilnetzes (10) zugeordnet sind, und
- die Automatisierungseinrichtungen (AE) jeweils derart ausgestaltet sind, dass sie auf die Messwerte (M) der ihnen zugeordneten Messeinrichtungen (ME) jeweils ein teilnetzindividuell vorgegebenes Zustandsschätzverfahren anwenden, den Zustand ihres Teilnetzes (11, 12, 13) jeweils unter Bildung einer Zustandsangabe (ZA1, ZA2, ZA3) schätzen und die geschätzten Zustandsangaben (ZA1, ZA2, ZA3) an die Verteilnetzleiteinrichtung (DMS) übertragen.

3. Verteilnetz nach Anspruch 2,
**dadurch gekennzeichnet, dass** die Verteilnetzleiteinrichtung (DMS) derart ausgestaltet ist, dass sie die geschätzten Zustandsangaben (ZA1, ZA2, ZA3) der untergeordneten Automatisierungseinrichtungen (AE) unter Bildung einer den Zustand des Verteilnetzes (10) angebenden Gesamtzustandsangabe (GZA) schätzt.

4. Verteilnetz nach einem der voranstehenden Ansprüche,
**dadurch gekennzeichnet, dass** die Automatisierungseinrichtung (AE) derart ausgestaltet ist, dass sie das vorgegebene Zustandsschätzverfahren unter Berücksichtigung der Netztopologie und/oder eines parametrierten Netz-Normal-Zustands des Teilnetzes (11, 12, 13) durchführt.

5. Verteilnetz nach einem der voranstehenden Ansprüche,
**dadurch gekennzeichnet, dass** die Automatisierungseinrichtung derart ausgestaltet ist, dass sie als geschätzte Zustandsangabe (ZA1, ZA2, ZA3) eine geschätzte elektrische Zustandsgröße bildet und diese mit einem vorgegebenen Grenzwert vergleicht und bei Über- oder Unterschreiten des vorgegebenen Grenzwerts ein entsprechendes Vergleichsergebnis an die Verteilnetzleiteinrichtung (DMS) übersendet.

6. Verteilnetz nach einem der voranstehenden Ansprüche,
**dadurch gekennzeichnet, dass**
- die Automatisierungseinrichtung (AE) derart ausgestaltet ist, dass sie als Zustandsgröße eine Spannungsgröße, eine Stromgröße und/oder eine Leistungsgröße schätzt und/oder
- die Automatisierungseinrichtung (AE) eine Anzeigeeinrichtung zur Anzeige der geschätzten Zustandsangabe und/oder der geschätzten elektrischen Zustandsgröße umfasst und/oder
- die Automatisierungseinrichtung (AE) derart ausgestaltet ist, dass sie unter Heranziehung der geschätzten Zustandsangabe (ZA1, ZA2, ZA3) Steuerungs- und/oder Regelsignale erzeugt, mit denen eine Steuerung und/oder Regelung des zugeordneten Teilnetzes (11, 12, 13) erfolgt.

7. Automatisierungseinrichtung für ein Verteilnetz nach einem der voranstehenden Ansprüche,
wobei
- die Automatisierungseinrichtung (AE) derart ausgestaltet ist, dass sie auf Messwerte (M) zumindest einer mit ihr in Verbindung stehenden Messeinrichtung (ME) ein vorgegebenes Zustandsschätzverfahren anwendet, den Betriebszustand des ihr zugeordneten Teilnetzes (11, 12, 13) unter Bildung einer Zustandsangabe schätzt und die geschätzte Zustandsangabe (ZA1, ZA2, ZA3) an eine Verteilnetzleiteinrichtung (DMS) überträgt, **dadurch gekennzeichnet, dass** die Automatisierungseinrichtung (AE) derart ausgestaltet ist, dass sie bei der Anwendung des vorgegebenen Zustandsschätzverfahrens für das ihr zugeordnete Teilnetz (11, 12, 13) parametrierte Leitungsimpedanzen verarbeitet; und
- die Automatisierungseinrichtung (AE) derart ausgestaltet ist, dass sie Kommunikationssignale, die von der zumindest einen Messeinrichtung (ME) über eine oder mehrere Netzleitungen des Teilnetzes (11, 12, 13) übertragen werden, hinsichtlich der Leitungslängen dieser Netzleitung oder Netzleitungen auswertet und die in dieser Weise bestimmten Leitungslängen bei der Durchführung des Zustandsschätzverfahrens verwertet.

8. Verfahren zum Betreiben eines Verteilnetzes (10) mit einer Verteilnetzleiteinrichtung (DMS) und einer Mehrzahl an der Verteilnetzleiteinrichtung (DMS) untergeordneten Automatisierungseinrichtungen (AE), die jeweils einem Teilnetz (11, 12, 13) des Verteilnetzes (10) zugeordnet sind,
wobei
- zur Schätzung des Betriebszustands des jeweiligen Teilnetzes mit den Automatisierungseinrichtungen (AE) jeweils ein vorgegebenes teilnetzindividuelles Zustandsschätzverfahren auf Messwerte (M), die sich auf das jeweilige Teilnetz (11, 12, 13) beziehen, angewendet wird,
- die geschätzten Zustandsangaben (ZA1, ZA2, ZA3) an die Verteilnetzleiteinrichtung (DMS) übertragen werden,
**dadurch gekennzeichnet, dass**
die Automatisierungseinrichtungen (AE) derart ausgestaltet sind, dass sie bei der Anwendung des vorgegebenen Zustandsschätzverfahrens für das ihnen zugeordnete Teilnetz (11, 12, 13) parametrierte Leitungsimpedanzen verarbeiten, und
- der Zustand der Teilnetze (11, 12, 13) jeweils unter Bildung einer Zustandsangabe (ZA1, ZA2, ZA3) geschätzt wird, wobei Kommunikationssignale, die von der zumindest einen Messeinrichtung (ME) über eine oder mehrere Netzleitungen des Teilnetzes (11, 12, 13) übertragen werden, hinsichtlich der Leitungslängen dieser Netzleitung oder Netzleitungen ausgewertet und die in dieser Weise bestimmten Leitungslängen bei der Durchführung des Zustandsschätzverfahrens verwertet werden.

## Claims

1. Distribution network (10) having a distribution network control device (DMS), wherein
- the distribution network (10) has at least one automation device (AE) which is subordinate to the distribution network control device (DMS) and is assigned to a subnetwork (11, 12, 13) of the distribution network (10), and wherein at least one measuring device (ME) which is connected to the subnetwork (11, 12, 13) and is intended to determine measured values (M) relating to the subnetwork (11, 12, 13) is connected to the automation device (AE), wherein
- the automation device (AE) is configured in such a manner that it applies a predefined state estimation method to the measured values (M) from the at least one measuring device (ME), estimates the operating state of the subnetwork while forming a state indication (ZA1, ZA2, ZA3) and transmits the estimated state indication (ZA1, ZA2, ZA3) to the distribution network control device (DMS), **characterized in that** the automation device (AE) is configured in such a manner that, when applying the predefined state estimation method, it processes line impedances parameterized for the subnetwork (11, 12, 13) assigned to it; and
- the automation device (AE) is configured in such a manner that it evaluates communication signals, which are transmitted from the at least one measuring device (ME) via one or more network lines of the subnetwork (11, 12, 13), with regard to the line lengths of this network line or these network lines and uses the line lengths determined in this manner when carrying out the state estimation method.

2. Distribution network according to Claim 1,
**characterized in that**
- a plurality of subordinate automation devices (AE) each assigned to a subnetwork (11, 12, 13) of the distribution network (10) are connected to the distribution network control device (DMS), and
- the automation devices (AE) are each configured in such a manner that they respectively apply a state estimation method predefined in a subnetwork-specific manner to the measured values (M) from the measuring devices (ME) assigned to them, respectively estimate the state of their subnetwork (11, 12, 13) while forming a state indication (ZA1, ZA2, ZA3) and transmit the estimated state indications (ZA1, ZA2, ZA3) to the distribution network control device (DMS).

3. Distribution network according to Claim 2,
**characterized in that**
the distribution network control device (DMS) is configured in such a manner that it estimates the estimated state indications (ZA1, ZA2, ZA3) of the subordinate automation devices (AE) while forming an overall state indication (GZA) indicating the state of the distribution network (10).

4. Distribution network according to one of the preceding claims,
**characterized in that**
the automation device (AE) is configured in such a manner that it carries out the predefined state estimation method while taking into account the network topology and/or a parameterized network normal state of the subnetwork (11, 12, 13).

5. Distribution network according to one of the preceding claims,
**characterized in that**
the automation device is configured in such a manner that it forms an estimated electrical state variable as the estimated state indication (ZA1, ZA2, ZA3) and compares it with a predefined limit value and transmits a corresponding comparison result to the distribution network control device (DMS) if the predefined limit value is exceeded or undershot.

6. Distribution network according to one of the preceding claims,
**characterized in that**
- the automation device (AE) is configured in such a manner that it estimates a voltage variable, a current variable and/or a power variable as the state variable, and/or
- the automation device (AE) comprises a display device for displaying the estimated state indication and/or the estimated electrical state variable, and/or
- the automation device (AE) is configured in such a manner that it generates control and/or regulating signals using the estimated state indication (ZA1, ZA2, ZA3), which signals are used to control and/or regulate the assigned subnetwork (11, 12, 13).

7. Automation device for a distribution network according to one of the preceding claims, wherein
- the automation device (AE) is configured in such a manner that it applies a predefined state estimation method to measured values (M) from at least one measuring device (ME) connected to it, estimates the operating state of the subnetwork (11, 12, 13) assigned to it while forming a state indication and transmits the estimated state indication (ZA1, ZA2, ZA3) to a distribution network control device (DMS), **characterized in that** the automation device (AE) is configured in such a manner that, when applying the predefined state estimation method, it processes line impedances parameterized for the subnetwork (11, 12, 13) assigned to it; and
- the automation device (AE) is configured in such a manner that it evaluates communication signals, which are transmitted from the at least one measuring device (ME) via one or more network lines of the subnetwork (11, 12, 13), with regard to the line lengths of this network line or these network lines and uses the line lengths determined in this manner when carrying out the state estimation method.

8. Method for operating a distribution network (10) having a distribution network control device (DMS) and a plurality of automation devices (AE) which are subordinate to the distribution network control device (DMS) and are each assigned to a subnetwork (11, 12, 13) of the distribution network (10), wherein
- in order to estimate the operating state of the respective subnetwork with the automation devices (AE), a predefined subnetwork-specific state estimation method is respectively applied to measured values (M) relating to the respective subnetwork (11, 12, 13),
- the estimated state indications (ZA1, ZA2, ZA3) are transmitted to the distribution network control device (DMS),
**characterized in that**
the automation devices (AE) are configured in such a manner that, when applying the predefined state estimation method, they process line impedances parameterized for the subnetwork (11, 12, 13) assigned to them, and
- the state of the subnetworks (11, 12, 13) is respectively estimated while forming a state indication (ZA1, ZA2, ZA3), wherein communication signals, which are transmitted from the at least one measuring device (ME) via one or more network lines of the subnetwork (11, 12, 13), are evaluated with regard to the line lengths of this network line or these network lines and the line lengths determined in this manner are used when carrying out the state estimation method.

## Revendications

1. Réseau (10) de distribution, comprenant un dispositif (DMS) de gestion du réseau de distribution, dans lequel
- le réseau (10) de distribution a au moins un dispositif (AE) d'automatisation, qui est subordonné au dispositif (DMS) de gestion du réseau de distribution et qui est affecté à un sous-réseau (11, 12, 13) du réseau (10) de distribution, et dans lequel
avec le dispositif (AE) d'automatisation est en liaison au moins un dispositif (ME) de mesure, raccordé au sous-réseau (11, 12, 13), pour déterminer des valeurs (M) de mesure, qui se rapportent au sous-réseau (11, 12, 13),
dans lequel
- le dispositif (AE) d'automatisation est conformé de manière à appliquer, aux valeurs (M) de mesure du au moins un dispositif (ME) de mesure, un procédé d'estimation d'état donnée à l'avance, qui estime l'état de fonctionnement du sous-réseau en formant une indication (ZA1, ZA2, ZA3) d'état et qui transmet l'indication (ZA1, ZA2, ZA3) d'état estimée au dispositif (DMS) de gestion du réseau de distribution, **caractérisé en ce que** le dispositif (AE) d'automatisation est conformé de manière à mettre en oeuvre, lors de l'application du procédé d'estimation d'état donné à l'avance du sous-réseau (11, 12, 13), qui lui est associé, des impédances de lignes paramétrées et
- le dispositif (AE) d'automatisation est conformé de manière à exploiter des signaux de communication, qui sont transmis par le au moins un dispositif (ME) de mesure par l'intermédiaire d'une ou de plusieurs lignes de réseau du sous-réseau (11, 12, 13), concernant les longueurs de ligne de cette ligne du réseau ou de ces lignes du réseau et à utiliser les longueurs de ligne ainsi déterminées lors de l'exécution du procédé d'estimation d'état.

2. Réseau de distribution suivant la revendication 1;
**caractérisé en ce que**
- avec le dispositif (DMS) de gestion du réseau de distribution, est en liaison une pluralité de dispositifs (AE) d'automatisation subordonnés, qui sont affectés chacun à un sous-réseau (11, 12, 13) du réseau (10) de distribution et
- les dispositifs (AE) d'automatisation sont conformés chacun de manière à appliquer, aux valeurs (M) de mesure des dispositifs (ME) de mesure qui leur sont associées, respectivement un procédé d'estimation d'état donné à l'avance individuellement au sous-réseau, à estimer l'état de leur sous-réseau (11, 12, 13) en formant respectivement une indication (ZA1, ZA2, ZA3) d'état et à transmettre les indications (ZA1, ZA2, ZA3) d'état estimées au dispositif (DMS) de gestion du réseau de distribution.

3. Réseau de distribution suivant la revendication 2,
**caractérisé en ce que**
le dispositif (DMS) de gestion du réseau de distribution est conformé de manière à estimer les indications (ZA1, ZA2, ZA3) d'état estimées des dispositifs (AE) d'automatisation subordonnés, en formant une indication (GZA) d'état globale indiquant l'état du réseau (10) de distribution.

4. Réseau de distribution suivant l'une des revendications précédentes,
**caractérisé en ce que**
le dispositif (AE) d'automatisation est conformé de manière à effectuer le procédé d'estimation d'état donnée à l'avance, en tenant compte de la topologie du réseau et/ou d'un état normal de réseau paramétré du sous-réseau (11, 12, 13).

5. Réseau de distribution suivant l'une des revendications précédentes,
**caractérisé en ce que**
le dispositif d'automatisation est conformé de manière à former, comme indication (ZA1, ZA2, ZA3) d'état estimée, une grandeur d'état électrique estimée et à la comparer à une valeur limite donnée à l'avance et, si l'on passe au dessus ou en dessous de la valeur limite donnée à l'avance, à transmettre un résultat de comparaison correspondant au dispositif (DMS) de gestion du réseau de distribution.

6. Réseau de distribution suivant l'une des revendications précédentes,
**caractérisé en ce que**
- le dispositif (AE) d'automatisation est conformé de manière à estimer, comme grandeur d'état, une grandeur de tension, une grandeur de courant et/ou une grandeur de puissance et/ou
- le dispositif (AE) d'automatisation comprend un dispositif d'affichage pour afficher l'indication d'état estimée et/ou la grandeur d'état électrique estimée et/ou
- le dispositif (AE) d'automatisation est conformé de manière à produire, en tirant parti des indications (ZA1, ZA2, ZA3) d'état estimées, des signaux de commande et/ou de régulation à l'aide desquels s'effectue une commande et/ou une régulation du sous-réseau (11, 12, 13) associé.

7. Dispositif d'automatisation pour un réseau de distribution suivant l'une des revendications précédentes
dans lequel
- le dispositif (AE) d'automatisation est conformé de manière à appliquer, à des valeurs (M) de mesure d'au moins un dispositif (ME) de mesure en liaison avec lui, un procédé d'estimation d'état donné à l'avance, à estimer l'état de fonctionnement du sous-réseau (11, 12, 13), qui lui est associé, en formant une indication d'état et à transmettre les indications (ZA1, ZA2, ZA3) d'état estimées à un dispositif (DMS) de gestion du réseau de distribution, **caractérisé en ce que** le dispositif (AE) d'automatisation est conformé, de manière à mettre en oeuvre, lors de l'application du procédé d'estimation d'état donné à l'avance du sous-réseau (11, 12, 13), qui lui est associé, des impédances de ligne paramétrées et
- le dispositif (AE) d'automatisation est conformé de manière à exploiter des signaux de communication, qui sont transmis par le au moins un dispositif (ME) de mesure, par l'intermédiaire d'une ou de plusieurs lignes de réseau du sous-réseau (11, 12, 13), concernant les longueurs de ligne de cette ligne de réseau ou de ces lignes de réseau et à utiliser les longueurs de ligne ainsi déterminées lorsque le procédé d'estimation d'état est effectué.

8. Procédé pour faire fonctionner un réseau (10) de distribution par un dispositif (DMS) de gestion du réseau de distribution et une pluralité de dispositifs (AE) d'automatisation subordonnés au dispositif (DMS) de gestion du réseau de distribution et associés respectivement à un sous-réseau (11, 12, 13) du réseau (10) de distribution, dans lequel
- pour estimer l'état de fonctionnement de chaque sous-réseau, on applique, par les dispositifs (AE) d'automatisation, respectivement un procédé d'estimation d'état donné à l'avance et individuel au sous-réseau, à des valeurs (M) de mesure, qui se rapportent au sous-réseau (11, 12, 13) respectif,
- on transmet les indications (ZA1, ZA2, ZA3) d'état estimées au dispositif (DMS) de gestion de réseau de distribution,
**caractérisé en ce que**
les dispositifs (AE) d'automatisation sont conformés de manière à mettre en oeuvre, lors de l'application du procédé d'estimation d'état donné à l'avance du sous-réseau (11, 12, 13), qui leur est associé, des impédances de ligne paramétrées et
- on estime l'état des sous-réseaux (11, 12, 13) en formant pour chacun une indication (ZA1, ZA2, ZA3) d'état, dans lequel on exploite des signaux de commutation, qui sont transmis par le au moins un dispositif (ME) de mesure par l'intermédiaire d'une ou de plusieurs lignes de réseau du sous-réseau (11, 12, 13), concernant les longueurs de ligne de cette ligne de réseau ou de ces lignes du réseau et on utilise les longueurs de ligne ainsi déterminées lors de la mise en oeuvre du procédé d'estimation d'état.
